# EUROPÄISCHE PATENTSCHRIFT

(11) **EP 2 297 701 B1**
(45) Veröffentlichungstag und Bekanntmachung des Hinweises auf die Patenterteilung: **16.01.2013**
(21) Anmeldenummer: 09753306.1
(22) Anmeldetag: 19.05.2009
(51) Int. Cl.: G06T 7/20, G08B 13/194, G06K 9/00

(54) **VIDEOANALYSE**
VIDEO ANALYSIS
ANALYSE VIDÉO

(30) Priorität: 28.05.2008 AT 8582008
(43) Veröffentlichungstag der Anmeldung: 23.03.2011
(73) Patentinhaber: Kiwisecurity Software Gmbh, 1040 Wien (AT)
(72) Erfinder: HÖRBINGER, Oliver, A-2500 Baden (AT); KRAUS, Klemens, A-1170 Wien (AT); RÖHR, Robert, A-1130 Wien (AT); MATUSEK, Florian, A-1090 Wien (AT); SUTOR, Stephan, A-2380 Perchtoldsdorf (AT)
(74) Vertreter: Gibler & Poth Patentanwälte OG
(86) Internationale Anmeldenummer: PCT/AT2009/000206
(87) Internationale Veröffentlichungsnummer: WO 2009/143542

(56) Entgegenhaltungen:
- US-A- 5 930 740
- US-A1- 2005 089 194
- US-B1- 7 151 562
- TOKLU C ET AL: "2-D mesh-based synthetic transfiguration of an object with occlusion" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, Bd. 4, 21. April 1997 (1997-04-21), Seiten 2649-2652, XP010225700 ISBN: 978-0-8186-7919-3
- LOPEZ A; CANTON-FERRER C; CASAS J R: "Multi-person 3D tracking with particle filterers on voxels" IEEE PROC ICASSP 2007, 2007, Seiten I-913-I-916, XP002545706
- BHANDARKAR S M ET AL: "Fast and Robust Background Updating for Real-time Traffic Surveillance and Monitoring" COMPUTER VISION AND PATTERN RECOGNITION, 2005 IEEE COMPUTER SOCIETY CONFERENCE ON, IEEE, PISCATAWAY, NJ, USA, 25. Juni 2005 (2005-06-25), Seite 55, XP031259695 ISBN: 978-0-7695-2372-9
- GANG HUA ET AL: "Measurement integration under inconsistency for robust tracking" COMPUTER VISION AND PATTERN RECOGNITION, 2006 IEEE COMPUTER SOCIETY CO NFERENCE ON NEW YORK, NY, USA 17-22 JUNE 2006, PISCATAWAY, NJ, USA,IEEE, PISCATAWAY, NJ, USA, Bd. 1, 17. Juni 2006 (2006-06-17), Seiten 650-657, XP010923021 ISBN: 978-0-7695-2597-6
- XIAOQIN ZHANG ET AL: "Multi-Information Fusion for Scale Selection in Robot Tracking" INTELLIGENT ROBOTS AND SYSTEMS, 2006 IEEE/RSJ INTERNATIONAL CONFERENCE ON, IEEE, PI, 1. Oktober 2006 (2006-10-01), Seiten 2828-2832, XP031006531 ISBN: 978-1-4244-0258-8
- COLLINS R ET AL: "A System for Video Surveillance and Monitoring" TECHNICAL REPORT, ROBOTICS INSTITUTE, CARNEGIE MELLON UNIVERSITY, Nr. CMU-RI-TR-00-12, 1. Mai 2000 (2000-05-01), Seiten 1-68, XP002550803
- RADU HORAUD ET AL: "AN ANALYTIC SOLUTION FOR THE PERSPECTIVE 4-POINT PROBLEM" COMPUTER VISION GRAPHICS AND IMAGE PROCESSING, ACADEMIC PRESS, DULUTH, MA, US, Bd. 47, Nr. 1, 1. Juli 1989 (1989-07-01), Seiten 33-44, XP000086842
- OLSON ET AL: "Moving object detection and event recognition algorithms for smart cameras" TEXAS INSTRUMENTS RESEARCH AND DEVELOPMENTS, XX, XX, 1. Januar 1997 (1997-01-01), Seiten 159-175, XP002969835
- SEBE, I. O., HU, J., YOU, S., AND NEUMANN, U.: "3D Video Surveillance with Augmented VIrtual Environments" IWVS, ACM SIGMM INTERNATIONAL WORKSHOP ON VIDEO SURVEILLANCE, 2. November 2003 (2003-11-02), - 8. November 2003 (2003-11-08) Seiten 107-112, XP007911819 ACM, NY
- FLECK S ET AL: "3D Surveillance A Distributed Network of Smart Cameras for Real-Time Tracking and its Visualization in 3D" COMPUTER VISION AND PATTERN RECOGNITION WORKSHOP, 2006 CONFERENCE ON NEW YORK, NY, USA 17-22 JUNE 2006, PISCATAWAY, NJ, USA,IEEE, PISCATAWAY, NJ, USA, 17. Juni 2006 (2006-06-17), Seiten 118-118, XP010922933 ISBN: 978-0-7695-2646-1

## Beschreibung

Die Erfindung betrifft ein Verfahren zum Auffinden von Bewegungsmustern in einem ersten digitalen Videosignal gemäß dem Oberbegriff des Patentanspruches 1.

Es ist bekannt bewegte bzw ortswechselnde Objekte innerhalb eines zeitlich fortlaufenden Videosignals zu verfolgen. Bekannte Verfahren weisen vor allem bei der Überwachung bzw. Analyse der Bewegungsmuster größerer bewegter Objektmengen, wie etwa größerer Menschenmengen, die Nachteile auf, dass diese sehr aufwendig und gleichzeitig fehleranfallig sind. Mit derartigen bekannten Verfahren ist etwa ein Auffinden von Bewegungsmustem in einem ersten digitalen Videosignal in Echtzeit, daher im Wesentlichen nur sehr geringfügig gegenüber dem Auftreten eines Ereignisses zeitverzögert, nicht möglich. Die Publikation "2-D mesh-based synthetic transfiguration of an object with occlusion" (TOKLU et al.) beschreibt das Tracken eines Objekts, sowie das Erzeugen einer Netzstruktur, welche das Objekt übersieht Die Publikation "Multi-person 3D tracking with particle filterers on voxels" (LOPEZ et al) beschreibt ein 3-D Trackingverfahren zum gleichzeitigen Tracken von Personen in mehreren Kamerabildern.

Aufgabe der Erfindung ist es daher ein Verfahren der eingangs genannten Art anzugeben, mit welchem die genannten Nachteile vermieden werden können, mit welchem ein Auffinden von Bewegungsmustern in einem ersten digitalen Videosignal beim Auftreten größerer bewegter Objektmengen in Echtzeit möglich ist.

Erfindungsgemäß wird dics durch die Merkmale des Patentanspruches 1 erreicht.

Dadurch ist ein Auffinden von Bewegungsmustern in einem ersten digitalen Videosignal beim Auftreten größerer bewegter Objektmengen in Echtzeit möglich. Dadurch ist eine EDV-mäßige Implementierung des erfindungsgemäßen Verfahrens mit vertretbarem Hardwareaufwand möglich. Dadurch werden vorhandene Hardwareressourcen besonders effektiv genützt.

Zahlreiche Bereiche des öffentlichen Lebens werden mit Hilfe von Videokameras überwacht, um Verbrecher abzuschrecken bzw. Verbrechen aufzuklären. Die zunehmende Anzahl an Videokameras bringt jedoch das Problem mit sich, dass die derart aufgenommene Bilderflut nicht mehr ausgewertet werden kann. Eine ständige visuelle Überwachung sämtlicher Kameras ist in Anbetracht der Tatsache, dass in einem modernen Großobjekt, wie etwa einem, internationalen Flughäfen mehrere tausend Kameras installiert sind, rein personell undurchführbar. Ein Mehr an Kameras bringt jedoch nur einen Sicherheitsgewinn, wenn die aufgenommenen Videodaten auch gesichtet bzw. bewertet werden. Vor allem in sicherheitsrelevanten Bereiche, ist eine ständige Sichtung und Bewertung der Videodaten notwendig um einen Schutz von Menschen und Anlagen zu gewährleisten.

Die US 2005/089194 A1 beschreibt ein Verfahren zur Videoanalyse bei welchem in jedem Einzelbild ein Hintergrundbild sowie ein gegenüber diesem ortswechseinder Vordergrundbereich ermittelt wird. Die rublikation "Fast and Robust Background Updating..." (Bhandarkar et al) beschreiben ein Verfahren, bei welchem zwischen einem ortswechselnden Vordergrund und einem Hintergrund unterschieden wird.

Die Publikation "Multi-Information Fusion for Scale Selection in Robot Tracking" (Xiaoqin et al) beschreibt einen erweiterten Mean-Shift-Tracker im Zusammenhang mit einer sog. "integral projection", sowie einem Positionsfaktor, welcher eine Exponentialfunktion umfasst Es wird ein Verfahren der vorstehend genannten Art angegeben mit welchem die genannten Nachteile vermieden werden können, mit welchem eine große Anzahl an Videokameras mit einer geringen Anzahl Bedienern überwacht bzw. gesteuert werden kann, und welches unempfindlich gegen sich ändernde Hintergründe oder Beleuchtungen ist.

Dadurch können Videodaten automatisch analysiert und bewertet werden, ohne dass die ständige visuelle Kontrolle durch einen wenigstens humanoiden Bediener notwendig ist. Dadurch kann das Augenmerk eines Bedienorgans auf bestimmte Vordergrundbereiche, welche etwa Objekte oder Gegenstände darstellen, gelenkt werden Dadurch können auch komplexe Videoanlagen mit einer großen Anzahl an Kameras durch eine geringe Anzahl an Bedienern gesteuert und überwacht werden. Durch die ständige Ermittlung des Hintergrundes werden sich ändernde Hintergründe oder Beleuchtungsänderungen erkannt, und führen nicht zu fehlerhaften Meldungen eines Vordergrundbereichs oder eines Objekts.

Die Erfindung betrifft weiters ein Computerprogrammprodukt, das direkt in den internen. Speicher eines Computers geladen werden kann und Softwarecodeabschnitte umfasst, sowie weiters einen Datenträger mit einem Computerprogrammprodukt nach Anspruch 8, wodurch eine besonders effektive Umsetzung der erfindungsgemäßen Verfahren möglich ist.

Die Erfindung betrifft weiters eine Sicherheitsanlage gemäß dem Patentanspruch 10. Aufgabe der Erfindung ist es eine Sicherheitsanlage der vorstehend genannten Art anzugeben, mit welcher die genannten Nachteile vermieden werden können, mit welcher eine große Anzahl an Videokameras mit einer geringen Anzahl Bedienern überwacht bzw gesteuert werden kann, und welche unempfindlich gegen sich ändernde Hintergründe oder Beleuchtungen ist.

Dadurch können Videodaten automatisch analysiert und bewertet werden, ohne dass die ständige visuelle Kontrolle durch einen humanoiden Bediener notwendig ist. Dadurch kann das Augenmerk eines Bedienorgans auf bestimmte Vordergrundbereiche bzw. Objekte gelenkt werden. Dadurch können auch komplexe Videoanlagen mit einer großen Anzahl an Kameras durch eine geringe Anzahl an Bedienern gesteuert und überwacht werden. Durch die ständige Ermittlung des Hintergrundes werden sich ändernde Hintergründe oder Beleuchtungsänderungen erkannt, und führen nicht zu fehlerhaften Meldungen eines Objekts. Die Unteransprüche, welche ebenso wie die unabhängigen Patentanspruche gleichzeitig einen Teil der Beschreibung bilden, betreffen weitere vorteilhafte Ausgestaltungen der Erfindung. Die Erfindung wird unter Bezugnahme auf die beigeschlossenen Zeichnungen, in weichen lediglich bevorzugte Ausführungsformen beispielhaft dargestellt sind, näher beschrieben. Dabei zeigt:
Fig. 1 ein Blockschaltbild einer erfindungsgemäßen Videokameraanordnung;
Fig. 2 ein Ablaufdiagram einer bevorzugten Ausbildung des erfindungsgemäßen Verfahrens;
Fig. 3 ein Ablaufdiagramm eines Tracker-Managers;
Fig. 4 ein Ablaufdiagramm eines bevorzugten Verfahrens zur codierten Speicherung einzelner Videnframes;
Fig. 5 eine Grundrissansicht einer Videokameraanordnung mit drei Videokameras;
Fig. 6 eine Grundrissansicht einer Videokameraanordnung mit zehn Videokameras;
Fig. 7 ein Modell der Grundrissansicht gemäß Fig. 6
Fig. 8 eine bevorzugte Bildschirmansicht eines Modells; und
Fig. 9 eine bevorzugte Darstellung eines dreidimensionalen Modells einer erfindungsgemäßen Videokameraanordnung.

Die gegenständliche Erfindung betrifft ein Verfahren zur Videoanalyse, insbesondere zur Videoüberwachung, wobei ein erstes digitales Videosignal, umfassend wenigstens mittelbar aufeinander folgende digitale Einzelbilder, in Echtzeit analysiert wird, wobei in jedem Einzelbild wenigstens ein Hintergrundbereich ermittelt wird, wobei gegenüber dem Hintergrundbereich wenigstens ein erster ortswechselnder Vordergrundbereich erkannt wird, und dass nachfolgend eine erste Meldung erzeugt, und vorzugsweise an eine Kontrollstelle gesendet wird.

Dadurch können Videodaten automatisch analysiert und bewertet werden, ohne dass die ständige visuelle Kontrolle durch einen humanoiden Bediener notwendig ist. Dadurch kann das Augenmerk eines Bedienorgans auf bestimmte Objekte gelenkt werden. Dadurch können auch komplexe Videoanlagen mit einer großen Anzahl an Videokameras 1,2 16 durch eine geringe Anzahl an Bedienern gesteuert und überwacht werden. Durch die ständige Ermittlung des Hintergrundes werden sich ändernde Hintergründe oder Beleuchtungsänderungen erkannt, und führen nicht zu fehlerhaften Meldungen eines Vordergrundbereichs und/oder eines Objekts.

Ein erfindungsgemäßes Verfahren bzw. eine erfindungsgemäße Videokameraanordnung bzw. Sicherheitsanlage ist zur Verwendung mit digitalen Videokameras 1, 2, 16 vorgesehen, wobei jede Art einer Videokamera 1, 2, 16 vorgesehen sein kann, welche ein digitales Videosignal ausgibt. Bei einem digitalen Videosignal handelt es sich bevorzugt um einen im Wesentlichen binären Datenstrom, welcher eine Reihe aufeinander folgender digitaler Einzelbilder, welche auch als Frame bezeichnet sein können, und gegebenenfalls ein Tonsignal aufweisen, umfasst. Erfindungsgemäß ist das Erkennen eines Hintergrundes bzw. vorzugsweise eines ortswechselnden, daher bewegten, hinzukommenden oder verschwindenden, Vordergrundbereichs vorgesehen. Da auch das Zuordnen eines erkannten Vordergrundbereichs in vorgebbare Kategorien vorgesehen sein kann, daher ob es sich bei dem Vordergrundbereich um einen Menschen oder etwa ein Gepäckstück handelt, bzw. in weiterer Folge eine Zusammenführung mehrerer erfindungsgemäß bearbeiteter Videosignale zu einem Modell eines überwachten Bereichs vorgesehen sein kann, ist bevorzugt eine Kalibrierung der durch Videokameras erzeugten Videosignale vorgesehen. Durch eine Kalibrierung der Videosignale ist weiters die Zuordnung eines Punktes auf einem Videobild zu einem Punkt auf einem Plan des überwachenden Bereichs möglich.

Im Folgenden wird die bevorzugte Kalibrierung eines Videosignals beispielhaft beschrieben. Linien, die in der realen Welt parallel sind, schneiden sich in fotographischen Abbildungen in Fluchtpunkten. Vorzugsweise sind Videokameras zur Anwendung gemäß der gegenständlichen Erfindung derart ausgerichtet, dass Menschen in der Abbildung im Wesentlichen aufrecht erscheinen, daher der "Up-Vector" der Videokamera 1, 2, 16 liegt mit dem Blickrichtungsvektor derselben im Wesentlichen in einer Vertikalebene. Somit schneiden sich alle vertikalen Linien (Säulen, Türstöcke, ...) der Abbildung in einem Fluchtpunkt unterhalb der Abbildung, da Videokameras 1, 2, 16, durch die Anordnung an einer Gebäudedecke oder einem Masten meist eine leicht abwärts geneigte Blickrichtung aufweisen. Dieser Fluchtpunkt wird vanishing_south genannt.

Des Weiteren scheinen in der vom Menschen gestalteten Umgebung oftmals, vor allem innerhalb von Gebäuden, rechteckige (orthogonale) Strukturen auf. Räume sind nahezu immer rechtwinkelig angelegt. Sofern Böden oder Wände eine strukturierte Oberfläche aufweisen, ist diese ebenfalls oftmals parallel bzw. rechtwinkelig zu Wänden eines Raumes ausgerichtet. Auch diese in der Realität parallelen Linien schneiden sich in der Abbildung in Fluchtpunkten, welche vanishing_east und vanishing_west genannt werden. Bei Kenntnis dieser drei Fluchtpunkte, etwa durch Berechnung, ist für eine Kalibrierung des Videosignals weiters die Kenntnis von drei tatsächlichen Längen in Richtung der Fluchtpunkte in dem durch die Videokamera 1, 2, 16 aufgenommenen Aufnahmebereich notwendig. Die weitere Kalibrierung des Videosignals erfolgt vorzugsweise unter Anwendung des sog. Doppelverhältnisses.

Wie bereits dargelegt kann der Einsatz einer jeden Art einer Videokamera 1, 2, 16 vorgesehen sein, wobei besonders bevorzugt der Einsatz feststehender Videokameras 1, 2, 16 bzw. sog. PTZ-Kameras 7 vorgesehen ist, wobei PTZ für Pan-Tilt-Zoom steht. Derartige PTZ-Kameras 7 sind motorisch schwenkbar und weisen einen vorgebbaren Zoombereich auf. Die Einstellbarkeit der Schwenk- und Kippmechanismen sind in der Regel derart genau, dass vordefinierte Punkte mit einer derartigen PTZ-Kamera 7 sehr genau angesteuert werden können. Derartige PTZ-Kameras 7 werden derart kalibriert, dass als Erstes die Position der PTZ-Kamera 7 im dreidimensionalen Raum gegenüber einem orthogonalen Achsenkreuz ermittelt wird. Dabei ist vorgesehen, dass die PTZ-Kamera 7 nacheinander auf einen Ursprungspunkt und auf drei Endpunkte im Raum ausgerichtet wird, welche zusammen ein orthogonales Achsenkreuz mit bekannten Längen zwischen dem Ursprung und den Endpunkten bilden, wobei jeweils die drei Relativwinkel zwischen der Ausrichtung auf den Ursprungspunkt und einen der drei Endpunkte gemessen werden, und aus diesen Relativwinkeln die Position der PTZ-Kamera 7 im dreidimensionalen Raum gegenüber dem orthogonalen Achsenkreuz ermittelt wird.

Diese Ermittlung der Position der PTZ-Kamera 7 erfolgt zufolge geometrischer bzw. trigonometrischer Berechnungen. Hiezu sei lediglich erwähnt, dass sich die Position der PTZ-Kamera 7 am Schnittpunkt dreier Tori befindet, welche durch Rotation jeweils eines Kreissegments jeweils um eine der drei orthogonal aufeinander angeordneten Achsen des orthogonalen Achsenkreuzes gebildet werden. Da dies verfahrenstechnisch sehr aufwendig ist, ist bevorzugt vorgesehen, dass - anstelle dem Schneiden dreier Tori - durch das Schneiden von Parallelkreisen auf einer Hilfskugeloberfläche, deren Mittelpunkt der Ursprungspunkt ist, die Position der PTZ-Kamera 7 im dreidimensionalen Raum gegenüber dem orthogonalen Achsenkreuz ermittelt wird. Dies ist möglich, da die Rotationsachsen der drei Tori auch gleichzeitig die Achsen des orthogonalen Achsenkreuzes sind. Hiedurch kann schnell und ohne großen Aufwand die Position der PTZ-Kamera 7 gegenüber dem orthogonalen Achsenkreuz ermittelt werden.

Bei dem erfindungsgemäßen Verfahren wird in jedem Einzelbild wenigstens ein Hintergrundbereich sowie ein erster ortswechselnder Vordergrundbereich ermittelt, wobei der erste ortswechselnde Vordergrundbereich sämtliche Bildbereich umfasst, welche nicht dem Hintergrundbereich zugeordnet werden. Daher, welche sich innerhalb der durch das erste Videosignal abgedeckten Sequenz derart bewegen, dass diese aufgrund der weiters erläuterten besonders bevorzugten Ausbildung des erfindungsgemäßen Verfahrens nicht dem Hintergrundbereich zugeordnet werden können. Dabei ist vorgesehen, dass die Werte, die jeder einzelne Pixel eines Kamerabilds über einen definierbaren Zeitraum in der Vergangenheit angenommen hat analysiert werden.

Bei einem erfindungsgemäßen Verfahren, bei welchem Einzelbilder mit einer vorgebbaren Anzahl an Pixel verarbeitet werden, wobei jeder Pixel wenigstens einen Wert, insbesondere einen Graustufenwert und/oder einen Farbwert, aufweist, ist daher bevorzugt vorgesehen, dass der Wert eines ersten Pixels eines ersten Einzelbildes mit einer vorgebbaren Anzahl Vergleichswerten verglichen wird, dass dem ersten Pixel der Wert eines ersten Vergleichswertes, aus der vorgebbaren Anzahl Vergleichswerten, zugeordnet wird, wenn der Wert des ersten Pixels innerhalb eines vorgebbaren Toleranzbereichs um den ersten Vergleichswert liegt, dass eine Auftretenshäufigkeit des ersten Vergleichswerts um einen vorgebbaren ersten Betrag erhöht wird, und dass der Vergleichswert mit der höchsten Auftretenshäufigkeit dem Hintergrundbereich zugeordnet wird. Dadurch wird ein dynamischer Hintergrund ermittelt, welcher stabil gegenüber zeitlich langsam fortschreitenden Änderungen bzw. gegenüber statistisch häufig auftretenden Veränderungen ist. Ein derart generierter bzw. ermittelter Hintergrund ist etwa stabil gegenüber tageszeitlich veränderten Lichtbedingungen. Weiters werden etwa sich leicht verändernde Bereiche, wie etwa ein im Wind bewegter Baum als Hintergrund erkannt, und führen nicht zu einer Alarmierung der Kontrollstelle.

Für jeden Pixel des Einzelbildes wird die Möglichkeit geschaffen, eine vorgebbare Anzahl Vergleichswerte und deren Auftretenshäufigkeit zu speichern bzw. aufzubewahren. In der Folge wird das beispielhaft für die Anzahl fünf beschrieben.

Wenn ein neuer Frame bzw. Einzelbild des Videosignals zur Verarbeitung durch das erfindungsgemäße Verfahren bereitgestellt wird, wird der Wert eines jeden Pixels mit den jeweils vorzugsweise fünf Vergleichswerten verglichen. Wenn der Wert innerhalb eines vorgebbaren Toleranzbereichs um einen der vorzugsweise fünf Vergleichswerte liegt, wird dieser Wert diesem gespeicherten Vergleichswert zugeordnet. Sobald ein passender gespeicherter Vergleichswert gefunden wurde, wird das Verfahren unterbrochen, und die weiteren Vergleichswerte werden nicht mehr überprüft.

Wenn der aktuelle Wert eines Pixels einem gespeicherten Vergleichswert zugeordnet werden kann, wird die Auftretenshäufigkeit dieses Vergleichswerts um einen vorgebbaren ersten Betrag, etwa um eins, erhöht. Somit erhalten diejenigen gespeicherten Vergleichswerte nach vielen Frames die größere Auftretenshäufigkeit, die häufiger die beste Approximation des aktuellen Werts eines Pixels waren. Unter der Annahme, dass in einer Videosequenz bzw. einem Videosignal am häufigsten jene Werte eines Pixels an einer spezifischen Stelle auftauchen, die zum Hintergrundbereich des Einzelbildes (und nicht zu bewegten bzw. ortsändernden Vordergrundbereichen und/oder Objekten) gehören, besitzt nun jener gespeicherte Wert für diesen Pixel die größte Auftretenshäufigkeit, der der Hintergrundfarbe bzw. -graustufe am ehesten entspricht.

Bevorzugt ist vorgesehen, dass, wenn der Wert des ersten Pixels außerhalb vorgebbarer Toleranzbereiche um die Vergleichswerte liegt, dem Vergleichswert mit der geringsten Auftretenshäufigkeit der Wert des ersten Pixels zugeordnet wird. Dadurch kann eine ständige Anpassung der Vergleichswerte an die sich ändernden Inhalte des Videosignals erreicht werden.

Gemäß einer besonders bevorzugten Ausbildung der Erfindung ist vorgesehen, dass ein Maximalwert als obere Grenze der Auftretenshäufigkeit vorgegeben wird. Sollte die Auftretenshäufigkeit eines gespeicherten Vergleichswerts diesen Maximalwert übersteigen, wird die Auftretenshäufigkeit auf den Maximalwert gesetzt. Diese Maßnahme definiert damit auch eine Lernrate; da ein neu in dem Videosignal aufscheinendes Objekt eben so viele Frames bzw. Einzelbilder benötigt, um die Auftretenshäufigkeit des ihm zugehörigen gespeicherten Vergleichswerts auf den Maximalwert zu bringen und damit diesen gespeicherten Wert als Hintergrund zu etablieren.

Weiters ist bevorzugt vorgesehen, dass die Auftretenshäufigkeit jedes Vergleichswertes nach einer vorgebbaren Anzahl nachfolgender Einzelbilder um einen vorgebbaren zweiten Betrag reduziert wird. Dadurch ist ein ständiges "Nachlernen" durch das erfindungsgemäße Verfahren gegeben. Eine vorgebbare Anzahl der nachfolgenden Einzelbilder von drei würde z.B. bedeuten, dass bei jedem dritten ankommenden Frame die Auftretenshäufigkeit aller gespeicherter Vergleichswerte um den zweiten Betrag, etwa um eins, reduziert werden. Dadurch wird die Auflretenshäufigkeit eines Vergleichswerts, der auf dem Maximalwert war und daher als Hintergrund bzw. Hintergrundbereich deklariert wurde, stetig auf die Auftretenshäufigkeit null reduziert, wenn er nicht mehr "erneuert" wird.

In Weiterbildung des erfindungsgemäßen Verfahrens, bei welchem ein zweites Einzelbild in einem vorgebbaren Zeitbereich nachfolgend dem ersten Einzelbild aufgenommen wird, ist bevorzugt zur Bestimmung eines ortswechselnden Vordergrundbereichs vorgesehen, dass der Hintergrundbereich des ersten Einzelbildes von einem Hintergrundbereich des zweiten Einzelbildes abgezogen wird, und die derart gebildete Differenz wenigstens dem ersten ortswechselnden Vordergrundbereich zugeordnet wird.

Ein einem Aufnahmebereich zugefügtes Objekt, welches anfangs als Teil des Vordergrundbereiches erkannt werden wird, wird mit Fortlaufen des Videosignals nach einer gewissen Zeitdauer als Hintergrund bzw. als Teil des Hintergrundbereiches erkannt werden. Zum Erkennen, ob ein solches Objekt einem Aufnahmebereich zugefügt oder entfernt worden ist, ist bevorzugt vorgesehen, dass das erfindungsgemäße Verfahren mehrmals, etwa zweimal, parallel durchgeführt wird, wobei jeweils unterschiedliche erste Beträge vorgesehen sind. Daher bei den beiden parallel ablaufenden Verfahren werden Veränderungen unterschiedlich schnell als Hintergrundbereich erkannt bzw. definiert. Daher ist ein schnell "lemendes" und ein langsam "lernendes" Verfahren vorgesehen. Dadurch ist auch eine Zuordnung möglich, ob ein Objekt dem Aufnahmebereich zugefügt oder entfernt worden ist. Sollte ein Objekt entfernt worden sein, ist es bei dem langsam "lernenden" Verfahren noch dem Vordergrundbereich zugeordnet, während dieser Bereich im schnell "lernenden" Verfahren bereits dem Hintergrund zugeordnet ist. Sollte ein Objekt hinzugefügt worden sein, ist dieses bei dem langsam "lernenden" Verfahren noch nicht dem Vordergrundbereich zugeordnet, sondern der betreffende Bereich noch als Hintergrundbereich definiert, während das Objekt im schnell "lernenden" Verfahren bereits dem Vordergrundbereich zugeordnet ist.

Besonders bevorzugt ist hiebei vorgesehen, dass sämtliche Pixel bewertet werden, welche innerhalb einer geometrischen Struktur, etwa einem Rechteck, um einen erkannten Vordergrundbereich angeordnet sind. Dadurch kann ein direkter Vergleich mit dem umgebenden Hintergrundbereich durchgeführt werden, wodurch die Fehlerwahrscheinlichkeit des Verfahrens gesenkt werden kann.

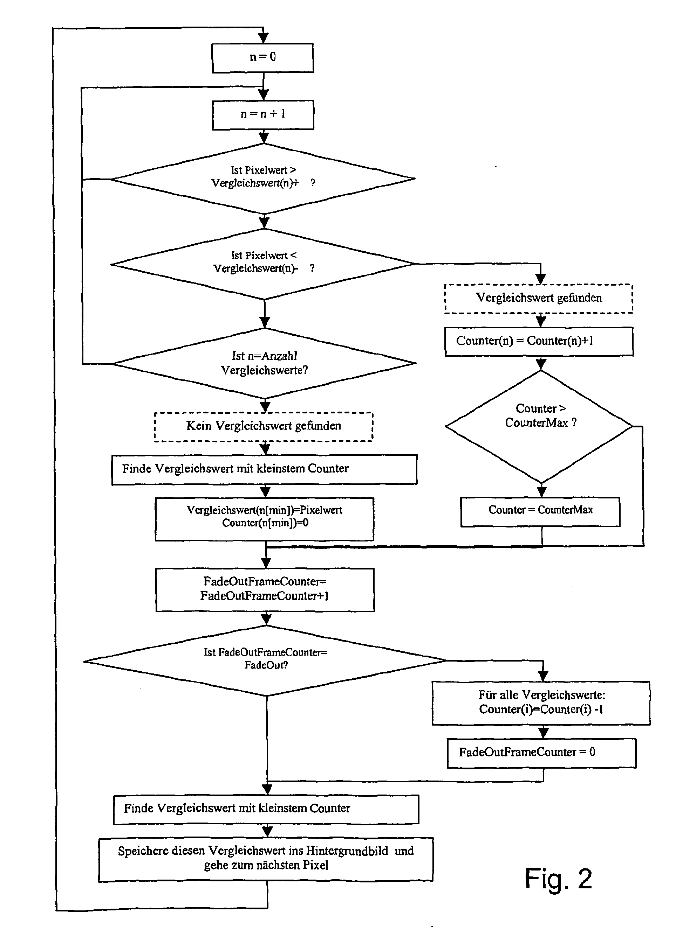

Fig. 2 zeigt ein Ablaufdiagram einer besonders bevorzugten Ausbildung des vorstehend beschriebenen erfindungsgemäßen Verfahrens.

In weiterer Folge sollen innerhalb eines erkannten Vordergrundbereichs einzelne, insbesondere körperlich, zusammengehörende Objekte, etwa Menschen, Fahrzeuge oder bewegte Gegenstände, wie etwa Koffer oder Gepäckwagen, erkannt werden, und die erkannten Objekte durch eine Videosequenz bzw. wie an weiterer Stelle beschrieben, auch über mehrere Videosignale bzw. Videosequenzen unterschiedlicher Videokameras 1, 2, 16 verfolgt werden. Das Erkennen eines Objekts und/oder das Verfolgen bereits bestimmter bzw. erkannter Objekte in einem Videosignal wird als Tracking bezeichnet. Hiefür sind Trackingverfahren bzw. sog. Tracker vorgesehen. Es ist bevorzugt vorgesehen, dass innerhalb des Vordergrundbereichs ortswechselnde Objekte mittels eines Mean-Shift-Trackers erkannt werden, und/oder deren Bewegungen mittels eines Mean-Shift-Trackers oder eines Optical-Flow-Trackers, verfolgt werden, wobei jeweils auch andere Tracker bzw. Trackingverfahren vorgesehen sein bzw. angewendet werden können.

Um die Vorteile verschiedener Tracker bzw. Trackingverfahren zu vereinen, ist ein sog. Tracker-Manager vorgesehen, welcher die Ergebnisse parallel laufender Trackingverfahren zusammenfasst und ein Trackingendergebnis ermittelt. Dabei ist insbesondere vorgesehen, dass aus einer Gruppe vorgebbarer Tracker eine Anzahl Tracker zur Verfolgung der Bewegung des ersten ortswechselnden Objekts ausgewählt wird, dass nachfolgend die Bewegung des wenigstens einen ersten ortswechselnden Objekts mit jedem der ausgewählten Tracker verfolgt und ein Trackingergebnis ermittelt wird, dass zu jedem Tracker eine Fehlerwahrscheinlichkeit ermittelt wird, und dass nachfolgend die Trackingergebnisse der Tracker mit geringen Fehlerwahrscheinlichkeiten zu einem Trackingendergebnis zusammengefasst werden.

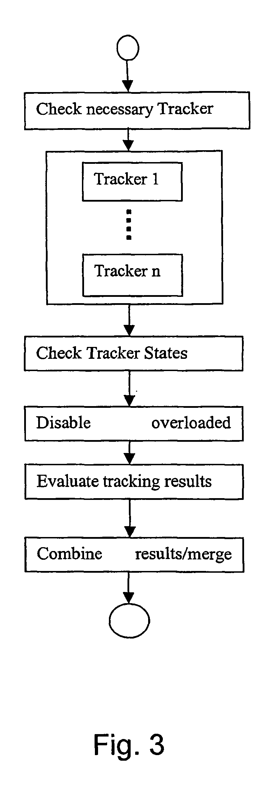

Fig. 3 zeigt ein Ablaufdiagramm eines derartigen Tracker-Managers. Als erster Schritt werden die zu verwendeten Tracker ausgewählt, wobei die bisherige, daher bei einem bereits laufenden Verfahren, die bis zu diesem Zeitpunkt erreichte, Leistungsfähigkeit und/oder Fehlerwahrscheinlichkeit zur Auswahl herangezogen werden. Zusätzlich werden Tracker vorgezogen, die bereits eine definierte Anzahl von vorherigen Frames abgearbeitet haben, um die Zuverlässigkeit des Trackers zu erhöhen.

Im nächsten Schritt werden die Abarbeitungsschritte der einzelnen Tracker gestartet, wobei diese zeitlich parallel oder hintereinander ausgeführt werden können. Das Ergebnis des Arbeitsschritts sind n Sets von Objekten, die nun zu einem stimmigen einzelnen Endergebnis zusammengeführt werden müssen; dies erfolgt in den nachfolgenden Schritten.

Je nach Tracker können unterschiedliche Eingaben die Effizienz und Zuverlässigkeit der Trackingverfahren beeinflussen, was zu fehlerhaften Ergebnissen führen kann; ein Beispiel ist eine zu hohe Personendichte bei einem Einsatz des sog. Mean-Shift-Trackers. Um dem entgegen zu wirken werden vorzugsweise für jeden Tracker Parameter definiert durch die es möglich ist eine Fehlerwahrscheinlichkeit zu ermitteln, die sich auf den gesamten Aufnahmebereich oder auch auf lediglich einen Bildabschnitt beziehen. Bei einer zu hohen, vorermittelten Fehlerwahrscheinlichkeit werden die so gekennzeichneten Bereiche für diesen Tracker nicht für das Endergebnis verwendet. Sollte die Fehlerwahrscheinlichkeit über einen bestimmten Zeitraum gleichermaßen hoch sein, wird die gesamte Abarbeitung dieses Trackers für einen vorgebbaren Zeitabschnitt eingestellt.

Nach diesem Schritt werden die einzelnen Objekte der unterschiedlichen Tracker untersucht um eine Wahrscheinlichkeit zu ermitteln, dass diese dasselbe physikalische Objekt darstellen. Wird eine vorgebbare Wahrscheinlichkeit ermittelt, dass es sich um dasselbe physikalische Objekt handelt, werden diese Objekte zu einem einzigen Objekt zusammengefasst. Die so zusammengefassten Objekte werden als Eingabemenge für einen Arbeitsfluss verwendet, der für die temporäre Zuordnung der Objekte zuständig ist, d.h. welche gefundenen Objekte im vorherigen Frame sind vergleichbar mit den gefundenen Objekten im derzeitigen Frame. Wie bereits dargelegt kann der Einsatz eines jeden Trackers bzw. eines jeden Trackingverfahrens vorgesehen sein. Nachfolgend werden zwei lediglich besonders bevorzugte Tracker, der Mean-Shift-Tracker und der sog. Optical-Flow-Tracker in jeweils besonders bevorzugten Ausbildungen näher beschrieben.

Die Grundzüge des Mean-Shift-Trackers sind dem Fachmann bekannt. Der Mean-Shift-Tracker wird gemäß gegenständlicher bevorzugten Ausbildung auf sog. Differenzbilder angewandt. Dabei handelt es sich um Einzelbilder, welche keine Hintergrundbereiche aufweisen, bzw. welche lediglich die erkannten Vordergrundbereiche aufweisen bzw. sofern vorgesehen auch tatsächlich darstellen. Derartige Differenzbilder weisen einen hohen Kontrast auf, was für die Anwendung des Mean-Shift-Trackers vorteilhaft ist, und zu geringen Fehlern des Mean-Shift-Trackers führt.

Auf die in einem Differenzbild aufscheinenden Vordergrundbereiche wird der Meanshift Clustering Algorithmus angewendet um die Zentren (bzw. Schwerpunkte) der einzelnen Vordergrundbereiche zu lokalisieren und derart körperlich zusammengehörige Objekte zu bestimmen. Dabei werden für Kernel bzw. Blöcke mit einer vorgebbaren Anzahl Pixel, welche jeweils wenigstens bereichsweise einen Vordergrundbereich umfassen, jeweils Vektoren bzw. Gradienten ermittelt, welche in Richtung der größten Helligkeit weisen. Derart können bei einem Differenzbild einzelne Objekte erkannt und verfolgt werden. Da ein herkömmlicher Mean-Shift-Tracker sehr arbeitsaufwendig und somit langsam ist, ist bevorzugt vorgesehen, diesen unter Anwendung eines sog. Integralbilds anzuwenden. Dadurch kann die ansonsten zeitaufwendige Berechnung der einzelnen Gradienten wesentlich beschleunigt werden, wodurch die Möglichkeit geschaffen wird, das erfindungsgemäße Verfahren mit vertretbarem Aufwand in Echtzeit durchführen zu können.

Bekannte Mean-Shift-Tracker weisen den Nachteil auf, dass alle Pixel einen gleichen Stellenwert aufweisen. Für die Ermittlung der Gradienten ist es jedoch vorteilhaft, wenn Pixel in der Mitte eines Kernels stärker gewichtet werden, als solche an einem Randbereich. Es ist daher bekannt, die Pixel innerhalb eines Kernels zu Gewichten. Die Gewichtung mit herkömmlichen Gewichtungsfunktionen ist jedoch mit dem Nachteil verbunden, dass dann die - für die Verarbeitung in Echtzeit vorteilhafte - Anwendung des Integralbildes unmöglich ist. In Weiterbildung der Erfindung ist daher bevorzugt vorgesehen, dass jeder Kernel bzw. Block mit wenigstens einer vorgebbaren Exponentialfunktion gewichtet wird. Exponentialfunktionen sind Funktionen, welche sich selbst in jeweils unterschiedlichen Wertebereichen ähnlich sind, sodass weiterhin die Ermittlung der Gradienten zufolge eines Integralbildes möglich ist. Durch die Gewichtung mit einer Exponentialfunktion können die Vorteile der Anwendung eines Integralbildes mit den Vorteilen der Gewichtung der einzelnen Pixel innerhalb eines Kernels kombiniert werden.

Wie vorstehend dargelegt, werden durch den Mean-Shift-Tracker jeweils Vektoren bzw. Gradienten ermittelt, welche in Richtung der größten Helligkeit weisen. Die Vektoren bzw. Gradienten weisen dabei einen Endpunkt auf, wobei bei einem idealen Verhalten des Mean-Shift-Trackers die Endpunkte sämtlicher einem Objekt zuordenbaren Vektoren in einem Punkt, dem Zentrum bzw. Schwerpunkt, konvergieren sollten, wodurch dann auch die Zuordnung einzelner Teilbereiche eines Vordergrundbereichs zu einem bestimmten Objekt möglich ist. Unter realen Bedingungen, bei tatsächlich implementierten Mean-Shift-Tracker, kommt es jedoch sehr selten zu einer derartigen Bündelung der Endpunkte der Vektoren in einem Punkt. Vielmehr sind diese Endpunkte der Vektoren in einem Bereich um das Zentrum bzw. den Schwerpunkt angeordnet. Dadurch kann es aber zu fehlerhaften Zuordnungen einzelner Blöcke zu einem Objekt kommen. Es hat sich gezeigt, dass die Genauigkeit des erfindungsgemäßen Verfahrens deutlich gesteigert werden kann, wenn einem Endpunkt des zu jedem Block ermittelten Vektors eine vorgebbare zweite Umgebung zugeordnet wird, und diese zweiten Umgebungen ebenfalls gemäß dem Mean-Shin-Verfahren bzw. -Tracker verarbeitet werden, wobei die vorstehend beschriebenen bevorzugten Ausführungen des Mean-Shift-Verfahrens vorgesehen sein können. Der Mean-Shift-Tracker wird dabei auf ein erstes Zwischenbild angewendet, welches lediglich aus den - gegebenenfalls bereichsweise überlappenden - zweiten Umgebungen aufgebaut ist. Bei der bevorzugten Implementierung des erfindungsgemäßen Verfahrens in Form eines Computerprogrammprodukts kann bevorzugt vorgesehen sein, dass dieses erste Zwischenbild nicht tatsächlich visuell dargestellt bzw. ausgegeben wird, sondern lediglich mathematisch beschrieben wird, und/oder imaginär in Form vorgebbarer Speicherbelegungen in einem Computer existiert. Dadurch kann erreicht werden, dass die derart ermittelten neuen Endpunkte der Vektoren wesentlich besser konvergieren, und eine deutlich bessere Zuordnung der einzelnen ursprünglichen Blöcke zu einem ortswechselnden Objekt erreicht werden. Dadurch wird die Leistungsfähigkeit des Mean-Shift-Trackers deutlich verbessert.

Der Optical-Flow-Tracker ist ein Verfahren, welches nicht wie der Mean-Shift-Tracker versucht einzelne Objekte isoliert zu verfolgen sondern einen sog. 'optischen Fluss' analysiert. Somit ist dieses Verfahren auch vor allem in Situationen, bei welchen aufgrund der Informationsdichte im Bild das Erkennen einzelner Objekte/Personen nicht mehr möglich ist, immer noch möglich Bewegungsrichtungen zu erkennen. Weiters ist es in manchen Situationen nicht von Interesse jedes Objekt einzeln verfolgen zu können. Optical-Flow-Tracker sind besonders vorteilhaft bei der Bewertung und Verfolgung von Menschenströmen. Wie eingangs dargelegt weisen bekannte Tracker den Nachteil auf, dass mit diesen ein Auffinden von Bewegungsmustem in einem ersten digitalen Videosignal in Echtzeit, daher im Wesentlichen nur sehr geringfügig gegenüber dem Auftreten eines Ereignisses zeitverzögert, nicht möglich ist. Die Erfindung betrifft daher weiters ein Verfahren zum Auffinden von Bewegungsmustem in einem ersten digitalen Videosignal, wobei das erste digitale Videosignal, umfassend wenigstens mittelbar aufeinander folgende digitale Einzelbilder, in Echtzeit analysiert wird, wobei in einem ersten Einzelbild wenigstens ein erster ortswechselnder Vordergrundbereich mit einer vorgebbaren Anzahl erster Markierungen vorgebbar belegt wird, wobei nachfolgend die Relativbewegung der ersten Markierungen zwischen dem ersten Einzelbild und einem diesem nachfolgenden zweiten Einzelbild ermittelt werden, wobei nachfolgend jeder ersten Markierung jeweils eine vorgebbare erste Umgebung zugeordnet wird, wobei das erste und/oder wenigstens ein zweiter ortswechselnder Vordergrundbereich mit einer vorgebbaren Anzahl zweiter Markierungen vorgebbar belegt wird, wobei die zweiten Markierungen, welche innerhalb von Schnittbereichen einer vorgebbaren Anzahl sich überschneidender erster Umgebungen angeordnet sind, entfernt werden, wobei nachfolgend die Relativbewegung der ersten und zweiten Markierungen zwischen dem zweiten Einzelbild und einem diesem nachfolgenden dritten Einzelbild ermittelt werden, und wobei die Relativbewegungen der ersten und/oder zweiten Markierungen als erstes Bewegungsmuster ausgegeben werden. Dadurch ist ein Auffinden von Bewegungsmustem in einem ersten digitalen Videosignal beim Auftreten größerer bewegter Objektmengen in Echtzeit möglich. Dadurch ist eine EDV-mäßige Implementierung des erfindungsgemäßen Verfahrens mit vertretbarem Hardwareaufwand möglich. Dadurch werden vorhandene Hardwareressourcen besonders effektiv genützt.

Als Bewegungsmuster wird dabei vorzugsweise die Richtung, Geschwindigkeit und gegebenenfalls Beschleunigung eines ortswechselnden Objekts verstanden.

Bei dem erfindungsgemäßen Verfahren werden auf Vordergrundbereichen, welche in dem ersten Einzelbild als ortswechselnd erkannt sind, Markierungen aufgebracht. Bevorzugt ist vorgesehen, dass Vordergrundbereiche zufolge des vorstehend beschriebenen Verfahrens erkannt werden. Es kann jedoch auch vorgesehen sein, sofern die erste Videokamera auf einen Ursprungsbereich gerichtet ist, welcher mit hoher Wahrscheinlichkeit ein Ursprung sämtlicher in einem Videosignal aufscheinender bewegter Objekte bzw. Vordergrundbereiche ist, etwa eine Personenzutrittsschleuse, dass auf eine separat implementierte Erkennung ortswechselnder Vordergrundbereiche verzichtet wird, und sämtliche Bereiche in diesem Ursprungsbereich mit Markierungen belegt werden.

Auf dem ersten Einzelbild werden erste Markierungen in vorgebbarer Verteilung angeordnet, wobei lediglich die ersten Markierungen weiterverarbeitet werden, welche auf einem ortswechselnden Vordergrundbereich angeordnet werden. Erfindungsgemäß kann vorgesehen sein, dass die Markierungen in jeder vorgebbaren Form verteilt auf dem wenigstens einen ersten Vordergrundbereich angeordnet werden. Bevorzugt ist vorgesehen, dass die ersten und/oder zweiten Markierungen in Form eines, vorzugsweise gleichmäßigen oder vorgebbar gewichtet verteilten, Rasters angeordnet werden, wobei besonders bevorzugt vorgesehen ist, Bildausschnitte, in welchen mit dem Auftreten bewegter bzw. ortsändernder Objekte bzw. Vordergrundbereiche gerechnet wird, mit einem dichteren Raster an Markierungen zu belegen.

Erfindungsgemäß ist vorgesehen, dass die Relativbewegung der ersten Markierungen zwischen dem ersten Einzelbild und einem diesem nachfolgenden zweiten Einzelbild ermittelt werden, wobei besonders bevorzugt vorgesehen ist, dass die Relativbewegungen der ersten und/oder zweiten Markierungen mittels eines Verfahrens zur Schätzung, insbesondere zur Bestimmung, eines optischen Flusses in dem ersten Videosignal, vorzugsweise ein Optical-Flow-Tracker, insbesondere zufolge des Hom-Schunk-Verfahrens oder des Kanade-Lucas-Tomasi-Verfahrens, ermittelt wird.

Den derart weiterbewegten ersten Markierungen wird weiters eine erste Umgebung zugeordnet, welche als, vorzugsweise gewichtetes, Rechteck, insbesondere als Quadrat, oder als, vorzugsweise gewichtete, Kegelschnittfläche, insbesondere als Kreis oder Ellipse, ausgebildet ist. In einem nächsten Verfahrensschritt wird das derart bearbeitete zweite Einzelbild wiederum mit zweiten Markierungen in der beschrieben Art belegt, wobei jedoch neue zweite Markierungen nur auf Vordergrundbereichen angeordnet werden, wenn an der betreffenden Stelle an welcher eine zweite Markierung vorgesehen ist, kein Schnittbereich einer vorgebbaren Anzahl sich überlappender bzw. überschneidender erster Umgebungen ist. Daher wenn eine zweite Markierung an einem ortswechselnden Vordergrundbereich angeordnet werden soll, diese Stelle aber bereits durch den Schnittbereich von, beispielsweise drei, ersten Umgebungen abgedeckt ist, so wird diese zweite Markierung nicht gesetzt. Anschließend wird das erfindungsgemäße Verfahren von Beginn weg sinngemäß für die weiters nachfolgenden Einzelbilder in Form einer Schleife wiederholt.

Bevorzugt ist vorgesehen, dass zu jeder Markierung und jeder berechneten Relativbewegung eine Fehlerstatistik ermittelt wird, und Markierungen, deren Fehlerstatistik eine vorgebbare Grenze übersteigt, entfernt werden. Weiters wird vorzugsweise die Größe der Relativbewegung betrachtet, und Markierungen, deren Relativbewegung unter ein vorgebbares Maß fällt, entfernt. Dadurch kann erreicht werden, dass sich nicht bewegende Markierungen, etwa solche welche fehlerhaft gesetzt wurden, ausscheiden und der Arbeitsaufwand bei Durchführung des Verfahrens gering gehalten werden kann. Zusätzlich wird vorzugsweise das Alter jeder Markierungen über einen vorgebbaren Zeitraum bzw. eine vorgebbare Anzahl an aufeinander folgenden Einzelbildern aufgezeichnet, und Markierungen, deren Alter eine vorgebbare Grenze, beispielsweise 50 aufeinander folgende Einzelbilder, übersteigt, entfernt. Auch dadurch kann eine ständige Regeneration der verarbeiteten Markierungen erreicht werden, und der Arbeitsaufwand bei Durchführung des Verfahrens gering gehalten werden.

Zur Auswertung der ermittelten Bewegungsmuster ist bevorzugt vorgesehen, dass wenigstens das zweite Einzelbild in vorgebbar anordenbare Segmente vorgebbarer Form und Größe unterteilt wird, dass wenigstens die ersten Bewegungsmuster innerhalb eines jeden Segments bewertet werden, und dass für jedes Segment ein Segmentbewegungsmuster ermittelt wird. Daher wird wenigstens das zweite Einzelbild, vorzugsweise auch sämtliche weiteren Einzelbilder, vorgebbar segmentiert, wobei die Segmente in Form und Größe vorgebbar sind. Vorzugsweise werden die Segmente an den zu erwartenden Bildinhalt angepasst. Daher Bereiche, in welchen nicht mit Vordergrundbereichen bzw. Objekten zu rechnen ist, welche für einen Überwacher von Interesse sein dürften, werden größere Segmente angeordnet, welche in Bereichen, welche möglichst genau analysiert werden sollen, mehrere kleine Bereiche angeordnet werden. Innerhalb eines jeden derartigen Segments wird vorzugsweise ein Richtungshistogramm erstellt wird, in welchem jede ermittelte Bewegungsrichtung, vorzugsweise bewertet bzw. gewichtet, eingetragen wird. Dadurch kann verhindert werden, dass mehrere große ermittelte Bewegungsrichtungen ein Segmentbewegungsmuster ergeben würden, welches die tatsächlichen Bewegungsrichtungen nicht mehr wiedergibt. Dadurch ist eine schnelle und doch differenzierte Bewertung der Bewegungsabläufe innerhalb des ersten Videosignals möglich.

Aus dem ersten Bewegungsmuster und/oder aus den Segmentbewegungsmustern wird vorzugsweise wenigstens ein erstes Hauptbewegungsmuster ermittelt. Hiezu ist kann ebenfalls vorgesehen sein, dass ein Richtungshistogramm erstellt wird, in welchem jedes Segmentbewegungsmuster, vorzugsweise bewertet bzw. gewichtet, eingetragen wird. Dadurch kann weiters ein globales Hauptbewegungsmuster ermittelt werden. Weiters ist vorzugsweise vorgesehen, gezielt nach bestimmten Bewegungsrichtungen bzw. Objekten mit bestimmten Bewegungsrichtungen innerhalb des Videosignals zu suchen, etwa nach Objekten, welche sich entgegen einem Hauptbewegungsmuster bewegen, daher etwa sehr schnell sind (laufen) und/oder sich etwa auf einer Rolltreppe entgegen der Fahrtrichtung fortbewegen. Derartige abweichende Bewegungsmuster lassen den Verdacht auf eine sicherheitsrelevante Situation zu.

Besonders bevorzugt ist vorgesehen, dass die beschriebenen Verfahren als Computerprogrammprodukt umgesetzt ist, welches direkt in den internen Speicher eines Computers geladen werden kann, oder auf einem Datenträger abgelegt ist, und Softwarecodeabschnitte umfasst, mit denen die Schritte eines der erfindungsgemäßen Verfahren ausgeführt werden, wenn das Computerprogrammprodukt auf einem Computer ausgeführt wird. Ein Computer ist hiebei vorzugsweise jegliche Vorrichtung, welche einen geeigneten Mikroprozessor, Mikrocontroller und/oder digitalen Signalprozessor (DSP), sowie die weiters notwendigen Speicher und/oder einen Datenbus umfasst. Dabei kann etwa auch vorgesehen sein, dass ein Mikrocontroller und/oder ein digitaler Signalprozessor innerhalb eines sog. PLD (Programmable Logic Device) oder FPGA (Field Programmable Gate Array) ausgebildet ist. Neben herkömmlichen Personal Computern bzw. Großrechnern sind dabei weiters vor allem Ausbildung eines Computers als sog. Embedded System vorgesehen.

Die Erfindung betrifft weiters eine Videokameraanordnung mit wenigstens einer ersten und einer zweiten Videokamera 1, 2, wobei die erste und die zweite Videokamera 1, 2 wenigstens bereichsweise den selben Bereich aufnehmen, wobei die erste Videokamera 1 an eine erste Datenverarbeitungseinheit 3 und die zweite Videokamera 2 an eine zweite Datenverarbeitungseinheit 4, insbesondere umfassend wenigstens einen digitalen Signalprozessor, angeschlossen sind, zum Erkennen eines Hintergrundes und/oder eines ortswechselnden Vordergrundbereichs und/oder eines Objekts. Eine derartige Videokameraanordnung ist besonders gut für die Umsetzung eines erfindungsgemäßen Verfahrens geeignet, da jeweils einer Videokamera 1, 2 eine Datenverarbeitungseinheit 3, 4 zugeordnet ist. Die mit der Umsetzung des erfindungsgemäßen Verfahrens verbundene hohe Rechenleistung kann somit durch Bereiststellung separater Datenverarbeitungseinheit 3, 4, 8 bereitgestellt werden. Dabei kann auch die Kalibrierung der einzelnen Videokameras 1, 2, 7, 16 durch die Datenverarbeitungseinheiten 1, 2, 8 erfolgen.

In Weiterführung der Erfindung ist bevorzugt vorgesehen, dass die erste und die zweite Datenverarbeitungseinheit 3, 4 an eine erste Zentraldatenverarbeitungseinheit 5 angeschlossen sind, zur Bildung eines Modells 18 der von der ersten und zweiten Videokamera 1, 2 aufgenommenen Bereiche, wobei weiters bevorzugt vorgesehen sein kann, dass die erste Zentraldatenverarbeitungseinheit 5 an einen Datenspeicher 6 angeschlossen ist. Dadurch können die Daten, welche durch jede der Videokameras 1, 2, 7, 16 ermittelt werden in einem einfachen und übersichtlichen Modell 18 zusammengestellt werden.

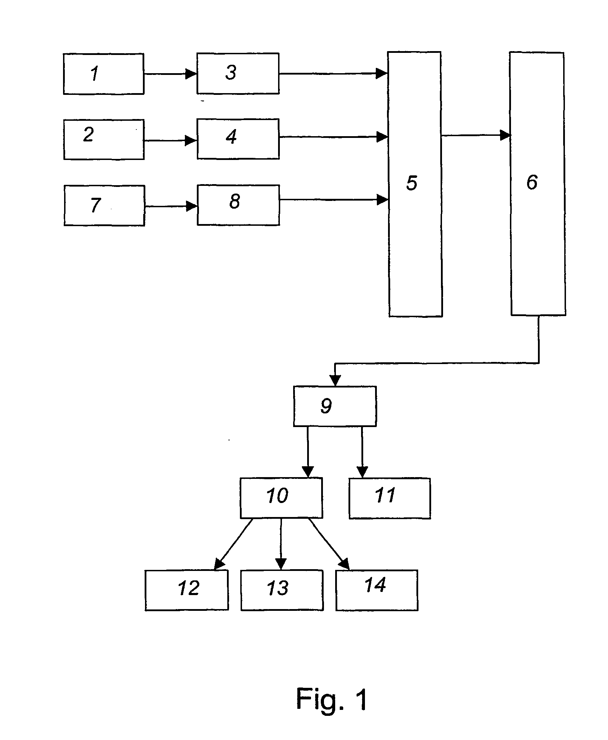

Fig. 1 zeigt ein Blockschaltbild einer besonders bevorzugten entsprechenden Anordnung, wobei noch weitere Baugruppen vorgesehen und dargestellt sind. Eine erste und zweite Videokamera 1, 2 sind jeweils an eine erste bzw. zweite Datenverarbeitungseinheit 3, 4 angeschlossen. Weiters ist eine PTZ-Kamera 7 vorgesehen, welche an eine dritte Datenverarbeitungsanlage 8 angeschlossen ist, welche neben der Umsetzung des erfindungsgemäßen Verfahrens weiters auch für die Kalibrierung und Steuerung der PTZ-Kamera 7 vorgesehen sein kann. Zusätzlich zu den dargestellten drei Videokameras 1, 2, 7 kann jede vorgebbare Anzahl weiterer Videokameras 16 vorgesehen sein, wobei durchaus die Anordnung vieler tausend Videokameras 1, 2, 7, 16 vorgesehen sein kann. Weiters kann vorgesehen sein, neben den beschriebenen Videokameras 1, 2, 7, 16 auch Videokameras 1, 2, 7, 16 vorzusehen, welche bereits eine integrierte Datenverarbeitungseinheit 3, 4, 8 umfassen. Weiters können sog. mobile Überwachungseinheiten vorgesehen sein, welche jeweils wenigstens eine Videokamera 1, 2, 7, 16 sowie eine Datenverarbeitungseinheit 3, 4, 8 und einen Datenspeicher 6 umfassen, und nur ausgelesen werden, wenn dies durch ein Ereignis, etwa einen Terroranschlag bedingt ist. Zusätzlich kann jede Kombination der vorstehend beschriebenen Anordnungen unterschiedlicher Videokameras 1, 2, 7, 16 vorgesehen sein, etwa die Kombination aus statischen Videokameras 1, 2 und PTZ-Kameras 7.

Die Datenverarbeitungseinheiten 3, 4, 8 der einzelnen Videokameras 1, 2, 7, 16 sind an eine erste Zentraldatenverarbeitungseinheit 5 angeschlossen.

In diesem Zusammenhang kann vorgesehen sein, dass wenigstens zwei digitale Videosignale, welche jeweils einem wenigstens bereichsweise überlappenden Aufnahmebereich zugeordnet sind, zu einem Modell 18 des gesamt durch die Videosignale beschriebenen Aufnahmebereichs 15 zusammengeführt werden, und dass Modell 18 ausgegeben, insbesondere angezeigt, wird, wobei besonders bevorzugt vorgesehen sein kann, dass das Modell 18 als dreidimensionales Modell 19 erstellt wird. Zum Zusammenführen der, durch die einzelnen Videokameras 1, 2, 7, 16 ermittelten Videosignale, bzw. insbesondere der Informationen, ob Bereiche eines Bildes Hintergrundbereich oder Vordergrundbereich sind, sowie die Verfolgung detektierter Objekte quer durch eine von mehreren Videokameras 1, 2, 7, 16 abgedeckten Aufnahmebereichs ist eine Kalibrierung der einzelnen Videokameras 1, 2, 7, 16 vorteilhaft. Weiters ist ein globales Koordinatensystem notwendig, um die einzelnen Videosignale bzw. die aus diesen extrahierten bzw. gewonnenen Daten in einem einzigen Modell 18 zu verbinden. Dadurch kann einen Benutzer einer derartigen Videokameraanordnung die Möglichkeit gegeben werden sich schnell und intuitiv in einem videoüberwachten Bereich zu recht zu finden, wobei der Benutzer immer die Daten erhält, welche mit hoher Wahrscheinlichkeit die für den Benutzer interessantesten Daten sind.

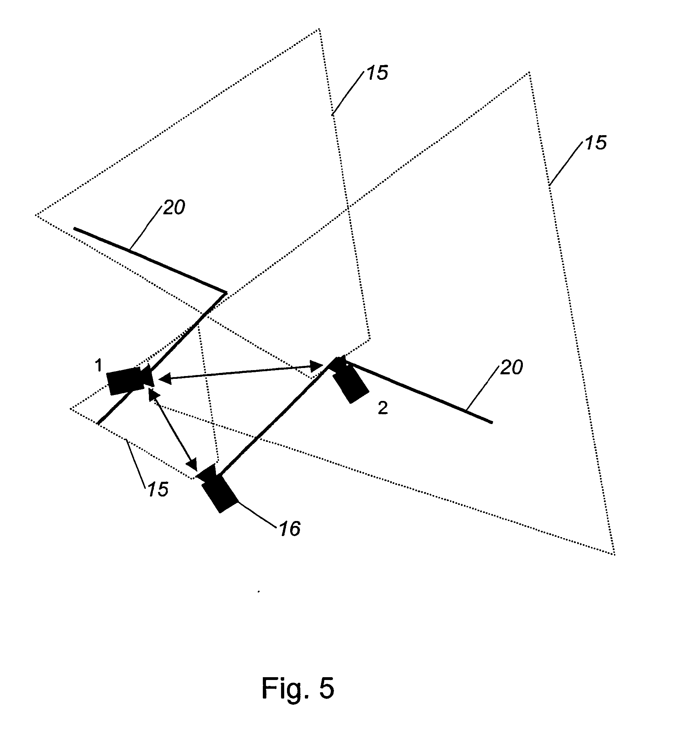

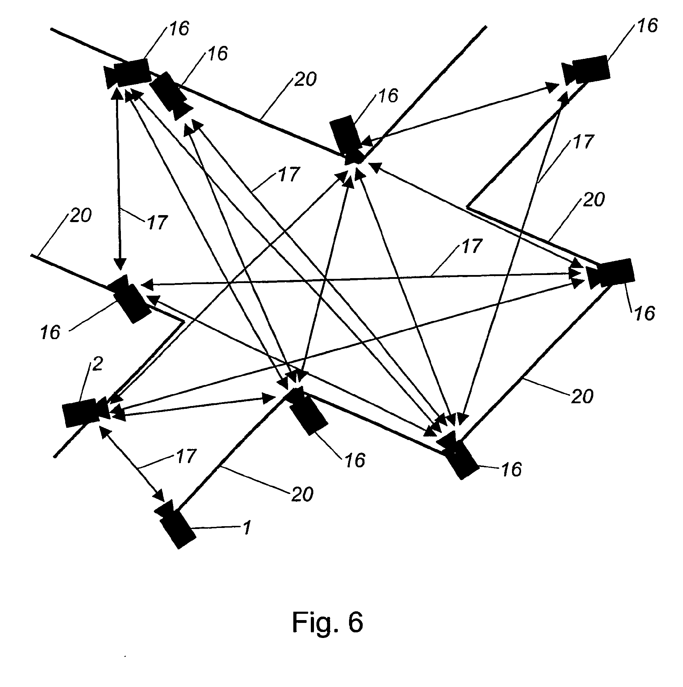

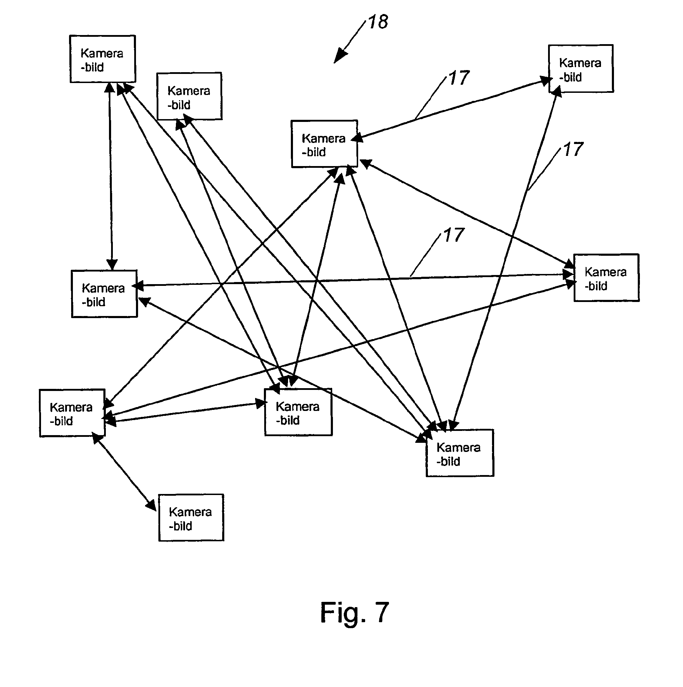

- In der ersten Zentraldatenverarbeitungseinheit 5 wird aus den von den Daten der einzelnen Datenverarbeitungseinheiten 3, 4, 8 ein Model 18 des gesamten, durch die Videokameras 1, 2, 7, 16 überwachten Bereichs gebildet. Fig. 5 zeigt eine Anordnung mit drei Videokameras 1, 2, 16 in einer schematischen Grundrissdarstellung, wobei neben den Videokameras 1, 2, 16 auch deren Aufnahmebereiche 15 sowie markante Gebäudekanten 20 dargestellt sind. Fig. 6 zeigt eine Anordnung mit zehn Videokameras 1, 2, 16, wobei durch die Doppelpfeile 17 jeweils überlappende Aufnahmebereiche verdeutlicht werden. Aus Gründen der Übersichtlichkeit wurde auf eine vollständige Bezeichnung sämtlicher Doppelpfeile verzichtet. Den neben der ersten und zweiten Videokamera 1,2 weiters in den Fig. 5 und 6 dargestellten Videokameras 16 wurde dabei einheitlich das Bezugszeichen 16 zugewiesen. Fig. 7 zeigt ein Modell 18 der

Anordnung gemäß Fig. 6, wobei an die Stelle der einzelnen Videokameras 1, 2, 16 gemäß der Grundrissansicht aus Fig. 6 jeweils die durch die betreffenden Videokameras 1, 2, 16 aufgenommenen Bilder gesetzt werden.

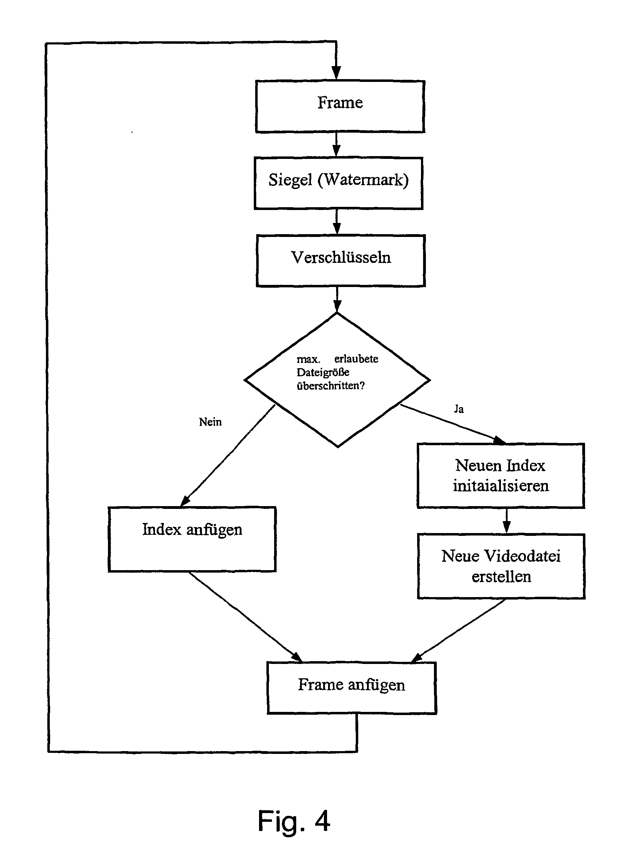

Das durch die Zentraldatenverarbeitungseinheit 5 erstellte Modell 18 wird in einem Datenspeicher 6 abgelegt, wobei aus Sicherheitsgründen die codierte Speicherung der entsprechenden Daten vorgesehen sein kann. In Fig. 4 ist ein Ablauf eines bevorzugten Verfahrens zur codierten Speicherung der einzelnen Videoframes dargestellt.

Die Zentraldatenverarbeitungseinheit 5 und/oder der Datenspeicher 6 sind mit einem Anwendungsserver 9 verbunden, welcher die ermittelten Daten für die Bearbeitung durch einen Benutzer aufbereitet, und mit einer Benutzerschnittstelle 10 bzw. einer mobilen Schnittstelle 11 in Verbindung steht. Durch die mobile Schnittstelle 11 ist ein Zugriff auf das System etwa durch einen sich bewegenden Wächter möglich. Dadurch ist die videotechnische Verfolgung eines Zielobjekts unmittelbar durch eine Zugriffsmannschaft, etwa ein Polizeisondereinsatzkommando, möglich.

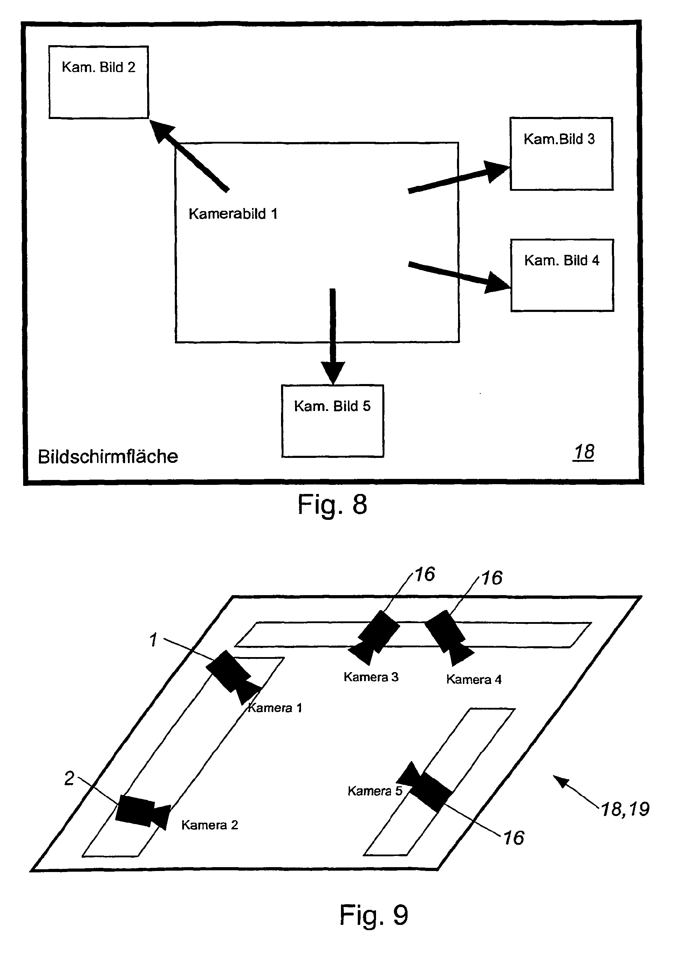

Die Benutzerschnittstelle 10 liefert die Daten an eine Einheit zur sog. Ereignisdarstellung 12. Eine solche Darstellung ist beispielhaft in Fig. 8 dargestellt. Auf einem symbolisch dargestellten Bildschirm werden etwa die Videokameras 1, 2, 16 gemäß der Darstellung in Fig. 7 angezeigt, wobei durch die Ereignisdarstellung 12 Videosignale, welche durch das erfindungsgemäße Verfahren erkannte Ereignisse umfassen, zentral vergrößert dargestellt werden. Darüber hinaus ermöglicht dies die gezielte und intuitive Verfolgung eines Zielobjekts durch einen Bereich, welcher durch mehrere Videokameras 1, 2, 16 überacht wird. Die in einer Bildschirmansicht gemäß Fig. 8 dargestellten Bilder einzelner Videokameras sind an der Stelle eines Grundrisses des überwachten Bereichs dargestellt, an welchem die Videokamera 1, 2, 16 angeordnet ist, oder den diese aufnimmt.

Dabei ist bei einer Ausführung der Erfindung, bei welcher ein Grundrissmodel und ein dreidimensionales Modell 19 erstellt wird, vorgesehen, dass sowohl das Grundrissmodel als auch das dreidimensionale Modell 19 im Wesentlichen gleichzeitig angezeigt werden, und dass durch Auswahl eines der wenigstens zwei digitalen Videosignale im Grundrissmodel oder im dreidimensionalen Modell 19 das Videosignal im Grundrissmodel und im dreidimensionalen Modell 19 ausgewählt wird. Dabei kann etwa vorgesehen sein, dass durch Auswahl einer Videokamera 1, 2, 16 im dreidimensionalen Modell 19, etwa mittels einer Maus oder durch Berühren des entsprechenden Bereichs eines Touchscreens, auch das Bild derselben Videokamera 1, 2, 16 im Grundrissmodel ausgewählt und auf der zentralen Ansicht vergrößert dargestellt wird. Dadurch ist ein besonders schnelles und intuitives Arbeiten möglich. Dadurch können mit einer geringen Anzahl an Benutzern eine große Anzahl Videokameras 1, 2, 16 überwacht werden. Dadurch ist weiters nur eine geringe Anlernzeit für die Benutzer notwendig.

An die Benutzerschnittstelle 10 ist weiters eine Einheit 13 zur Darstellung einer dreidimensionalen Ansicht bzw. eines dreidimensionalen Modells 19 des überwachten Bereichs angeschlossen. Fig. 9 zeigt beispielhaft eine derartige Darstellung. Hiedurch wird einem Benutzer die Möglichkeit gegeben, sich schnell und intuitiv in einem überwachten Raum zu orientieren. Dies ist vor allem vorteilhaft bzw. wichtig bei Videokameraanordnungen bzw. Sicherheitsanlagen, bei welchen eine sehr große Anzahl an Videokameras 1, 2, 7, 16 durch eine begrenzte Anzahl an Personen überacht werden muss, sowie beim Einsatz von Personal, welches mit den räumlichen Gegebenheiten nur unzureichend vertraut ist, wie dies etwa beim Einsatz von Polizeieinsatzkräften im Zuge der Verbrechensbekämpfung gegeben ist.

Zusätzlich besteht die Möglichkeit, dass an die Benutzerschnittstelle 10 eine Einheit 14 zur statistischen und/oder forensischen Analyse der ermittelten Daten angeschlossen ist. Hiedurch besteht eine weitere Möglichkeit, auf außergewöhnliche bzw. auffällige Ereignisse bzw. Verhaltensweisen aufmerksam zu werden.

In Weiterbildung des vorstehend beschriebenen erfindungsgemäßen Verfahrens kann in diesem Zusammenhang vorgesehen sein, dass wenigstens zwei digitale Videosignale, welche jeweils einem wenigstens bereichsweise überlappenden Aufnahmebereich 15 zugeordnet sind, zu einem Modell 18 der gesamten durch die Videosignale beschriebenen Aufnahmebereiche 15 zusammengeführt werden, und dass Modell 18 ausgegeben, insbesondere angezeigt, wird, wobei besonders bevorzugt vorgesehen sein kann, dass das Modell 18 als dreidimensionales Modell 19 erstellt wird. Zum Zusammenführen der durch die einzelnen Videokameras 1, 2, 7, 16 ermittelten Videosignale, bzw. insbesondere der Informationen, ob Bereiche eines Bildes Hintergrundbereich und/oder Vordergrundbereich sind, sowie die Verfolgung detektierter Objekte quer durch die von mehreren Videokameras 1, 2, 7, 16 abgedeckten Aufnahmebereiche 15 ist eine Kalibrierung der einzelnen Videokameras 1, 2, 7, 16 vorteilhaft. Weiters ist ein globales Koordinatensystem notwendig, um die einzelnen Videosignale bzw. die aus diesen extrahierten bzw. gewonnenen Daten in einem einzigen Modell 18 zu verbinden. Dadurch kann einen Benutzer einer derartigen Videokameraanordnung die Möglichkeit gegeben werden sich schnell und intuitiv in einem videoüberwachten Bereich zu recht zu fanden, wobei der Benutzer immer die Daten erhält, welche mit hoher Wahrscheinlichkeit die für den Benutzer interessantesten Daten sind.

Die Erfindung betrifft weiters eine Sicherheitsanlage, welche eine erfindungsgemäße Videokameraanordnung aufweist und/oder ein erfindungsgemäßes Verfahren anwendet, wobei insbesondere vorgesehen ist, dass eine derartige Sicherheitsanlage weiters wenigstens einen Sensor ausgewählt aus der Gruppe: Lichtschranke, Bewegungsmelder, Trittschallsensor, Vibrationssensor, Kontaktsensor, Infrarotsensor, umfasst. Bevorzugt kann dabei vorgesehen sein, dass der wenigstens eine Sensor an die Zentraldatenverarbeitungseinheit angeschlossen ist, wodurch die durch die Sensoren gewonnen Daten ebenfalls bei der Bildung des Models berücksichtigt werden können. Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zum Auffinden von Bewegungsmustern in einem ersten digitalen Videosignal, wobei das erste digitale Videosignal, umfassend wenigstens mittelbar aufeinander folgende digitale Einzelbilder, in Echtzeit analysiert wird, wobei in einem ersten Einzelbild wenigstens ein erster ortswechselnder Vordergrundbereich mit einer vorgebbaren Mehrzahl erster Markierungen vorgebbar belegt wird, wobei nachfolgend die Relativbewegung der ersten Markierungen zwischen dem ersten Einzelbild und einem diesem nachfolgenden zweiten Einzelbild ermittelt werden, wobei nachfolgend jeder weiterbewegten ersten Markierung jeweils eine vorgebbare erste Umgebung im zweiten Einzelbild zugeordnet wird, wobei in dem derart bearbeiteten zweiten Einzelbild der erste ortswechselnde Vordergrundbereich und/oder wenigstens ein zweiter ortswechselnder Vordergrundbereich mit einer vorgebbaren Mehrzahl zweiter Markierungen vorgebbar belegt wird, wobei die zweiten Markierungen, welche innerhalb von Schnittbereichen einer vorgebbaren Mehrzahl sich überschneidender erster Umgebungen angeordnet sind, entfernt werden, wobei nachfolgend die Relativbewegung der ersten und zweiten Markierungen zwischen dem zweiten Einzelbild und einem diesem nachfolgenden dritten Einzelbild ermittelt werden, und wobei die Relativbewegungen der ersten und/oder zweiten Markierungen als erstes Bewegungsmuster ausgegeben werden.

2. Verfahren nach Anspruch 1, **dadurch gekennzeichnet, dass** die ersten und/oder zweiten Markierungen in Form eines, vorzugsweise gleichmäßigen oder vorgebbar gewichtet verteilten, Rasters abgeordnet werden.

3. Verfahren nach Anspruch 1 oder 2, **dadurch gekennzeichnet, dass** die Relativbewegungen der ersten und/oder zweiten Markicrungen mittels eines Verfahrens zur Schätzung, insbesondere zur Bestimmung, eines optischen Flusses in dem ersten Videosignal, vorzugsweise ein Optical-Flow-Tracker, insbesondere zufolge des Horn-Schunk-Verfahrens oder des Kanade-Lucas-Tomasi-Verfahrens, ermittelt wird.

4. Verfahren nach Anspruch 1, 2 oder 3, **dadurch gekennzeichnet, dass** die erste Umgebung als, vorzugsweise gewichtetes, Rechteck, insbesondere Quadrat, oder als, vorzugsweise gewichtete, Kegelschnittfläche, insbesondere als Kreis oder Ellipse, ausgebildet ist.

5. Verfahren nach einem der Ansprüche 1 bis 4, **dadurch gekennzeichnet, dass** wenigstens das zweite Einzelbild in vorgebbar anordenbare Segmente vorgebbarer Form und Größe unterteilt wird, dass wenigstens die ersten Bewegungsmuster innerhalb eines jeden Segments bewertet werden, und dass für jedes Segment ein Segmentbewegungsmuster ermittelt wird.

6. Verfahren nach einem der Ansprüche 1 bis 5, **dadurch gekennzeichnet, dass** wenigsten aus dem ersten Bewegungsmuster und/oder aus den Segmentbewegungsmustern wenigstens ein erstes Hauptbewegungsmuster ermittelt wird.

7. Verfahren nach einem der Ansprüche 1 bis 6, **dadurch gekennzeichnet, dass** der wenigstens eine ortswcchselnde Vordergrundbereich mittels eines Verfahrens zur Videoanalyse, insbesondere zur Videoüberwachung, erkannt wird, wobei ein erstes digitales Videosignal, umfassend wenigstens mittelbar aufeinander folgende digitale Einzelbilder, in Echtzeit analysiert wird, wobei in jedem Einzelbild wenigstens ein Hintergrundbereich ermittelt wird, wobei in jedem Einzelbild gegenüber dem Hintergrundbereich wenigstens ein erster ortswechselnder Vordergrundbereich erkannt wird, und wobei nachfolgend eine ersteden Vordergrundbereich betreffende - Meldung erzeugt, und vorzugsweise an eine Kontrollstelle gesendet wird, wobei wenigstens ein erstes ortswechselndes Objekt, welches Teil des ersten ortswechselnden Vordergrundbereichs ist, mittels eines Meau-Shift-Trackers erkannt wird, und dessen Bewegungen mit dem Mean-Shift-Tracker verfolgt werden, wobei auf den Vordergrundbereich ein Mean-Shift-Clustering Algorithmus angewendet wird, und nachfolgend Blöcke umfassend eine vorgebbare Anzahl Pixel gemäß dem Mean-Shift-Verfahren unter Anwendung eines Intcgralbilds verarbeitet werden, und dabei die einzelnen Blöcke mit wenigstens einer vorgebbaren Exponentialfunktion gewichtet werden.

8. Computerprogrammprodukt, das direkt in den internen Speicher eines Computers geladen werden kann und Softwarecodeabschnitte umfasst, mit denen die Schritte eines der Verfahren gemäß einem der Ansprüche 1 bis 7 ausgeführt werden, wenn das Computerprogrammprodukt auf einem Computer ausgeführt wird.

9. Datenträger mit einem Computerprogrammprodukt nach Anspruch 8.

10. Sicherheitsanlage mit Mitteln zur Durchführung des Verfahrens nach einem der Ansprüche 1 bis 7.

11. Sicherheitsanlage nach Anspruch 10, **gekennzeichnet durch** einen Sensor ausgewählt aus der Gruppe: Lichtschranke, Bewegungsmelder, Trittschallsensor, Vibrationssensor, Kontaktsensor, Infrarotsensor.

## Claims

1. A method for locating patterns of movement in a first digital video signal, with the first digital video signal which comprises at least indirectly successive individual digital images being analyzed in real time, in a first individual image at least one location-changing foreground region being assigned in a predetermined manner to a predeterminable plurality of first markings, subsequently the relative movement of the first markings being determined between the first individual image and a second individual image subsequent to said first individual image, subsequently each of the further moved first markings being respectively assigned a predeterminable first environment in the second individual image, in the second individual image thus processed the first location-changing foreground region and/or at least one second location-changing foreground region being predeterminably assigned a predeterminable plurality of second markings, with the second markings, which are arranged within overlapping regions of a predeterminable plurality of overlapping first environments, being removed, subsequently the relative movements of the first and second markings being determined between the second individual image and a third individual image following said second image, and with the relative movements of the first and/or second markings being output as the first pattern of movement.

2. A method according to claim 1, **characterized in that** the first and/or second markings are detailed in form of a raster which is preferably even or distributed in a predeterminably weighted manner.

3. A method according to claim 1 or 2, **characterized in that** the relative movements of the first and/or second markings are determined by means of a method for estimation, especially for determining an optical flow in the first video signal, preferably an optical flow tracker, especially on the basis of the Horn-Schunk method or the Kanade-Lucas-Tomasi method.

4. A method according to claim 1, 2 or 3, **characterized in that** the first environment is arranged as a preferably weighted rectangle, especially a square, or as a preferably
weighted conic section, especially as a circle or ellipse.

5. A method according to one of the claims 1 to 4, **characterized in that** at least the second individual image is subdivided into segments of predetermined form and size which can be arranged in a predeterminable manner, that at least the first patterns of movement within each segment are evaluated, and that a segment movement pattern is determined for each segment.

6. A method according to one of the claims 1 to 5, **characterized in that** at least one first main pattern of movement is determined at least from the first pattern of movement and/or from the segment movement patterns.

7. A method according to one of the claims 1 to 6, **characterized in that** the at least one location-changing foreground region is recognized by means of a method for video analysis, especially for video monitoring, with a first digital video signal, comprising at least indirectly successive digital individual images, being analyzed in real time, with at least one background region being determined in each individual image, with at least one first location-changing foreground region being recognized in every individual image in relation to the background region, and with subsequently a first message being generated relating to the foreground region and being preferably dispatched to a control location, and at least one first location-changing object, which is part of the first location-changing foreground region, being recognized by means of a mean-shift tracker, and its movements being traced with the mean-shift tracker, with a mean-shift-clustering algorithm being applied to the foreground region, and subsequently blocks comprising a predeterminable number of pixels being processed according to the mean-shift method by applying an integral image, and the individual blocks being weighted in this process with at least one predeterminable exponential function.

8. A computer program product which can be loaded directly into the internal memory of a computer and comprises software code sections with which the steps of one of the methods according to one of the claims 1 to 7 can be performed when the computer program product is run on a computer.

9. A data medium with a computer program product according to claim 8.

10. A security installation with means for performing the method according to one of the claims 1 to 7.

11. A security installation according to claim 10, **characterized by** a sensor chosen from the group of light barriers, motion detectors, impact sound sensors, vibration sensors, contact sensors, infrared sensors.

## Revendications

1. Procédé de recherche de schémas de mouvement dans un premier signal vidéo numérique, dans lequel le premier signal vidéo numérique, comprenant des images numériques discrètes se suivant au moins indirectement, est analysé en temps réel, dans lequel au moins une première zone d'avant-plan de localisation variable est remplie de façon pouvant être prédéterminée par une pluralité prédéterminée de premiers marquages, dans lequel le mouvement relatif des premiers marquages entre la première image discrète et une deuxième image discrète suivant celle-ci est déterminé, dans lequel un premier environnement pouvant être déterminé dans la deuxième image discrète est ensuite affecté à chaque premier marquage déplacé, dans lequel, dans la deuxième image discrète ainsi traitée, la première zone d'avant-plan de localisation variable et/ou au moins une deuxième zone d'avant-plan de localisation variable sont remplies avec une pluralité pouvant être prédéterminée de deuxièmes marquages, dans lequel les deuxièmes marquages qui se trouvent à l'intérieur de zones d'intersection d'une pluralité pouvant être prédéterminée de premier environnements qui se recoupent sont supprimés, dans lequel le mouvement relatif des premiers et deuxièmes marquages entre la deuxième image discrète et une troisième image discrète suivant celle-ci est déterminé, et dans lequel les mouvements relatifs des premiers et/ou deuxièmes marquages sont émis en sortie comme premier schéma de mouvement.

2. Procédé selon la revendication 1, **caractérisé en ce que** les premiers et/ou deuxièmes marquages sont disposés sous la forme d'une grille, de préférence régulière ou distribuée selon une pondération pouvant être prédéterminée.

3. Procédé selon la revendication 1 ou 2, **caractérisé en ce que** les mouvements relatifs des premiers et/ou deuxièmes marquages sont déterminés au moyen d'un procédé pour l'estimation, et en particulier pour la détermination, d'un flot optique dans le premier signal vidéo, de préférence un suiveur de flot optique, en particulier selon la méthode de Horn et Schunk ou la méthode de Kanade, Lucas et Tomasi.

4. Procédé selon la revendication 1, 2 ou 3 **caractérisé en ce que** le premier environnement est conformé comme un rectangle, de préférence pondéré, en particulier un carré, ou comme une surface de section de cône, en particulier pondérée, en particulier comme un cercle ou une ellipse.

5. Procédé selon la revendication 1 à 4, **caractérisé en ce qu'**au moins la deuxième image discrète est divisée en segments de forme et de taille pouvant être prédéterminées pouvant être disposés de façon prédéterminée, **en ce qu'**au moins les premiers schémas de mouvement sont analysés à l'intérieur de chaque segment, et **en ce qu'**un schéma de mouvement de segment est déterminé pour chaque segment.

6. Procédé selon l'une des revendications 1 à 5, **caractérisé en ce qu'**au moins un premier schéma de mouvement principal est déterminé à partir du premier schéma de mouvement et/ou à partir des schémas de mouvement de segment.

7. Procédé selon l'une des revendications 1 à 6, **caractérisé en ce que** l'au moins une zone d'avant-plan de localisation variable est reconnue au moyen d'un procédé d'analyse vidéo, en particulier pour la vidéosurveillance, un premier signal vidéo numérique comprenant des images numériques discrètes qui se suivent au moins indirectement étant analysé en temps réel, au moins une zone d'arrière-plan étant déterminée dans chaque image discrète, une première zone d'avant-plan de localisation variable étant reconnue dans chaque image discrète par rapport à la zone d'arrière-plan, et un premier message concernant la zone d'avant-plan étant ensuite généré et de préférence envoyé à un poste de contrôle, au moins un premier objet de localisation variable faisant partie de la première zone d'avant-plan de localisation variable étant reconnu au moyen d'un suiveur *mean shift* et ses mouvements étant suivis avec le suiveur *mean shift,* un algorithme de clustering *mean shift* étant appliqué à la zone d'avant-plan et des blocs comprenant un nombre pouvant être prédéterminé de pixels étant ensuite traités selon la méthode de dérive de la moyenne en utilisant une image intégrale, et les différents blocs étant alors pondérés avec au moins une fonction exponentielle pouvant être prédéterminée.

8. Programme pour ordinateur pouvant être chargé directement dans la mémoire interne d'un ordinateur et comprenant des segments de code logiciel avec lesquels les étapes de l'un des procédés selon l'une des revendications 1 à 7 sont exécutées quand le programme pour ordinateur est exécuté sur un ordinateur.

9. Support de données avec un programme pour ordinateur selon la revendication 8.

10. Installation de sécurité pourvue de moyens pour la mise en oeuvre du procédé selon l'une des revendications 1 à 7.

11. Installation de sécurité selon la revendication 10, **caractérisée en ce qu'**elle comporte un capteur choisi parmi le groupe : barrage photoélectrique, détecteur de mouvement, capteur de bruits de pas, capteur de vibrations, détecteur de contact, capteur à infrarouges.
